# EUROPEAN PATENT APPLICATION

(11) **EP 4 436 082 A1**
(43) Date of publication of application: **25.09.2024**
(21) Application number: 22894831.1
(22) Date of filing: 16.11.2022
(51) Int. Cl.: H04L 5/00

(54) **SENSING SIGNAL TRANSMISSION PROCESSING METHOD AND APPARATUS, AND RELATED DEVICE**

(30) Priority: 19.11.2021 CN 202111391726
(71) Applicant: Vivo Mobile Communication Co., Ltd., Dongguan, Guangdong 523863 (CN)
(72) Inventor: JIANG, Dajie, Dongguan, Guangdong 523863 (CN); YAO, Jian, Dongguan, Guangdong 523863 (CN); DING, Shengli, Dongguan, Guangdong 523863 (CN); LI, Jianzhi, Dongguan, Guangdong 523863 (CN); YUAN, Yannan, Dongguan, Guangdong 523863 (CN); WANG, Pucong, Dongguan, Guangdong 523863 (CN); QIN, Fei, Dongguan, Guangdong 523863 (CN)
(74) Representative: Conti, Marco
(86) International application number: PCT/CN2022/132240
(87) International publication number: WO 2023/088299

(57) **Abstract**

This application discloses a sensing signal transmission processing method and apparatus, and a related device, and pertains to the field of communication technologies. The sensing signal transmission processing method in the embodiments of this application includes: receiving, by a first device, first signaling from a second device, where the first signaling is used to indicate a target sensing signal; and performing, by the first device, sensing measurement on the target sensing signal or sending, by the first device, the target sensing signal, where the target sensing signal includes N types of sensing signals, N is a positive integer, and in a case that N is 1, the target sensing signal includes at least two resources.

## Description

### CROSS-REFERENCE TO RELATED APPLICATIONS

This application claims priority to Chinese Patent Application No. 202111391726.9, filed in China on November 19, 2021, which is incorporated herein by reference in its entirety.

### TECHNICAL FIELD

This application pertains to the field of communication technologies, and in particular, to a sensing signal transmission processing method and apparatus, and a related device.

### BACKGROUND

With the development of communication technologies, in addition to a communication capability, a future communication system will have a wireless sensing capability. For example, the discussion proposes that a device can perform sensing measurement through a manner of active sensing, passive sensing, interactive sensing, or the like. However, how to configure a sensing signal for implementing sensing measurement becomes an urgent problem to be resolved.

### SUMMARY

Embodiments of this application provide a sensing signal transmission processing method and apparatus, and a related device, which can implement sensing measurement.

According to a first aspect, a sensing signal transmission processing method is provided, including:
receiving, by a first device, first signaling from a second device, where the first signaling is used to indicate a target sensing signal; and
performing, by the first device, sensing measurement on the target sensing signal or sending, by the first device, the target sensing signal, where
the target sensing signal includes N types of sensing signals, N is a positive integer, and in a case that N is 1, the target sensing signal includes at least two resources.

According to a second aspect, a sensing signal transmission processing method is provided, including:
sending, by a second device, first signaling to a first device, where the first signaling is used to indicate a target sensing signal on which the first device performs sensing measurement, or to indicate the first device to send the target sensing signal, where
the target sensing signal includes N types of sensing signals, N is a positive integer, and in a case that N is 1, the target sensing signal includes at least two resources.

According to a third aspect, a sensing signal transmission processing apparatus is provided, including:
a first receiving module, configured to receive first signaling from a second device, where the first signaling is used to indicate a target sensing signal; and
an execution module, configured to perform sensing measurement on the target sensing signal or send the target sensing signal, where
the target sensing signal includes N types of sensing signals, N is a positive integer, and in a case that N is 1, the target sensing signal includes at least two resources.

According to a fourth aspect, a sensing signal transmission processing apparatus is provided, including:
a second sending module, configured to send first signaling to a first device, where the first signaling is used to indicate a target sensing signal on which the first device performs sensing measurement, or to indicate the first device to send the target sensing signal, where
the target sensing signal includes N types of sensing signals, N is a positive integer, and in a case that N is 1, the target sensing signal includes at least two resources.

According to a fifth aspect, a terminal is provided. The terminal includes a processor, a memory, and a program or an instruction stored in the memory and capable of running on the processor, where when the program or the instruction is executed by the processor, the steps of the method according to the first aspect are implemented, or the steps of the method according to the second aspect are implemented.

According to a sixth aspect, a terminal is provided, including a processor and a communication interface, where
the communication interface is configured to: receive first signaling from a second device, where the first signaling is used to indicate a target sensing signal; and perform sensing measurement on the target sensing signal or send the target sensing signal, where the target sensing signal includes N types of sensing signals, N is a positive integer, and in a case that N is 1, the target sensing signal includes at least two resources.

Alternatively, the communication interface is configured to send first signaling to a first device, where the first signaling is used to indicate a target sensing signal on which the first device performs sensing measurement, or to indicate the first device to send the target sensing signal, where the target sensing signal includes N types of sensing signals, N is a positive integer, and in a case that N is 1, the target sensing signal includes at least two resources.

According to a seventh aspect, a network-side device is provided. The network-side device includes a processor, a memory, and a program or an instruction stored in the memory and capable of running on the processor, where when the program or the instruction is executed by the processor, the steps of the method according to the first aspect are implemented, or the steps of the method according to the second aspect are implemented.

According to an eighth aspect, a network-side device is provided, including a processor and a communication interface, where
the communication interface is configured to: receive first signaling from a second device, where the first signaling is used to indicate a target sensing signal; and perform sensing measurement on the target sensing signal or send the target sensing signal, where the target sensing signal includes N types of sensing signals, N is a positive integer, and in a case that N is 1, the target sensing signal includes at least two resources.

Alternatively, the communication interface is configured to send first signaling to a first device, where the first signaling is used to indicate a target sensing signal on which the first device performs sensing measurement, or to indicate the first device to send the target sensing signal, where the target sensing signal includes N types of sensing signals, N is a positive integer, and in a case that N is 1, the target sensing signal includes at least two resources.

According to a ninth aspect, a readable storage medium is provided, where a program or an instruction is stored in the readable storage medium, and when the program or the instruction is executed by a processor, the steps of the method according to the first aspect are implemented, or the steps of the method according to the second aspect are implemented.

According to a tenth aspect, an embodiment of this application provides a chip, where the chip includes a processor and a communication interface. The communication interface is coupled to the processor. The processor is configured to run a program or an instruction to implement the steps of the method according to the first aspect, or the steps of the method according to the second aspect.

According to an eleventh aspect, a computer program product is provided, where the computer program product is stored in a non-transitory storage medium, and the computer program product is executed by at least one processor to implement the method according to the first aspect, or implement the method according to the second aspect.

In the embodiments of this application, the first device receives the first signaling from the second device, where the first signaling is used to indicate the target sensing signal; and the first device performs sensing measurement on the target sensing signal or the first device sends the target sensing signal, where the target sensing signal includes N types of sensing signals, N is a positive integer, and in a case that N is 1, the target sensing signal includes at least two resources. The embodiments of this application clarified that at least one type of sensing signal is sent or detected, thereby implementing sensing measurement. In addition, at least two types of sensing signals are sent or received, or a sensing signal is received or sent on at least two resources, so that when sensing detection is performed based on the sensing signal, a resolution of the detection can be improved, thereby improving sensing performance.

### BRIEF DESCRIPTION OF DRAWINGS

FIG. 1 is a structural diagram of a network system to which the embodiments of this application are applicable;
FIG. 2 is a first example diagram of a sensing signal transmission scenario according to an embodiment of this application;
FIG. 3 is a second example diagram of a sensing signal transmission scenario according to an embodiment of this application;
FIG. 4 is a flowchart of a sensing signal transmission processing method according to an embodiment of this application;
FIG. 5 is another flowchart of a sensing signal transmission processing method according to an embodiment of this application;
FIG. 6 is a structural diagram of a sensing signal transmission processing apparatus according to an embodiment of this application;
FIG. 7 is another structural diagram of a sensing signal transmission processing apparatus according to an embodiment of this application;
FIG. 8 is a structural diagram of a communication device according to an embodiment of this application;
FIG. 9 is a structural diagram of a terminal according to an embodiment of this application; and
FIG. 10 is a structural diagram of a network-side device according to an embodiment of this application.

### DESCRIPTION OF EMBODIMENTS

The following clearly describes technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the number of objects is not limited, for example, there may be one or more first objects. In addition, in the specification and claims, "and/or" indicates at least one of connected objects, and the character "/" generally indicates an "or" relationship between associated objects.

It should be noted that the technologies described in the embodiments of this application are not limited to a long term evolution (Long Term Evolution, LTE)/LTE-advanced (LTE-Advanced, LTE-A) system, but may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. In the following descriptions, a new radio (New Radio, NR) system is described for an illustrative purpose, and NR terms are used in most of the following descriptions. These technologies may also be applied to an application than an NR system application, for example, a 6th generation (6th Generation, 6G) communication system.

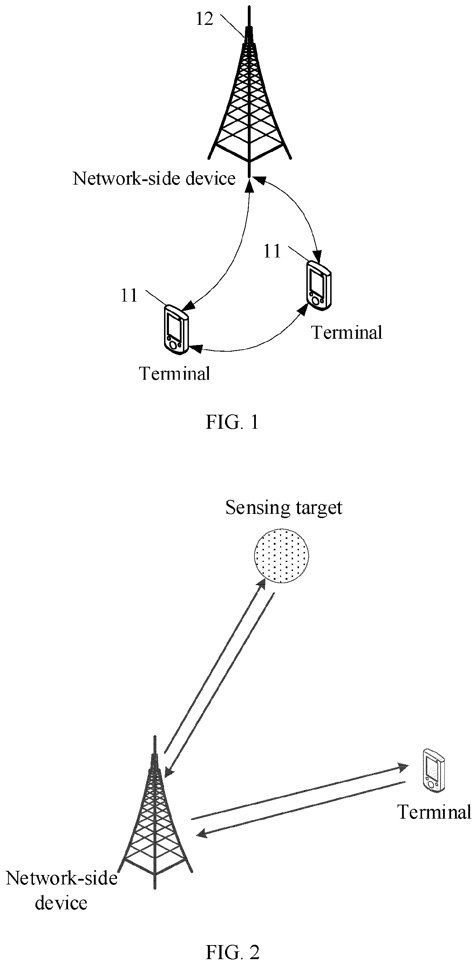

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), or a smart home (a home device with a wireless communication function, such as a refrigerator, a television, a washing machine, or furniture). The wearable device includes a smart watch, a smart band, a smart headset, smart glasses, smart jewelry (a smart bracelet, a smart chain bracelet, a smart ring, a smart necklace, a smart anklet, or a smart chain anklet), a smart wrist strap, smart clothing, a game console, and the like. It should be noted that a specific type of the terminal 11 is not limited in the embodiments of this application. The network-side device 12 may be a base station or a core network device. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a wireless fidelity (Wireless Fidelity, Wi-Fi) node, a transmission and reception point (Transmission and Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

For ease of understanding, the following describes some content included in the embodiments of this application.

### 1. Integrated sensing and communication, which may also be referred to as ISAC

In addition to a communication capability, a future mobile communication system, for example, a beyond 5th generation (Beyond 5th Generation, B5G) or 6G system, will have a sensing capability. One or more devices with sensing capabilities can sense information about a target object, such as an orientation, a distance, and a speed, or detect, track, identify, and image a target object, an event, an environment, and the like by sending and receiving a wireless signal. In the future, with deployment of a millimeter wave device, a terahertz device, and another small device with high-frequency and large-bandwidth capabilities in a 6G network, a resolution of sensing will be significantly improved compared to that of a centimeter wave, allowing the 6G network to provide a more refined sensing service.

Optionally, purposes of sensing are mainly divided into two categories. The first category of purpose is that sensing is used to assist communication or enhance communication performance. For example, a device A tracks a moving track of a device to provide a more accurate beamforming alignment device. Another category of purpose is sensing that is not directly related to communication. For example, the device A monitors a weather condition by using a wireless signal, and a mobile phone recognizes a user gesture through millimeter wave wireless sensing.

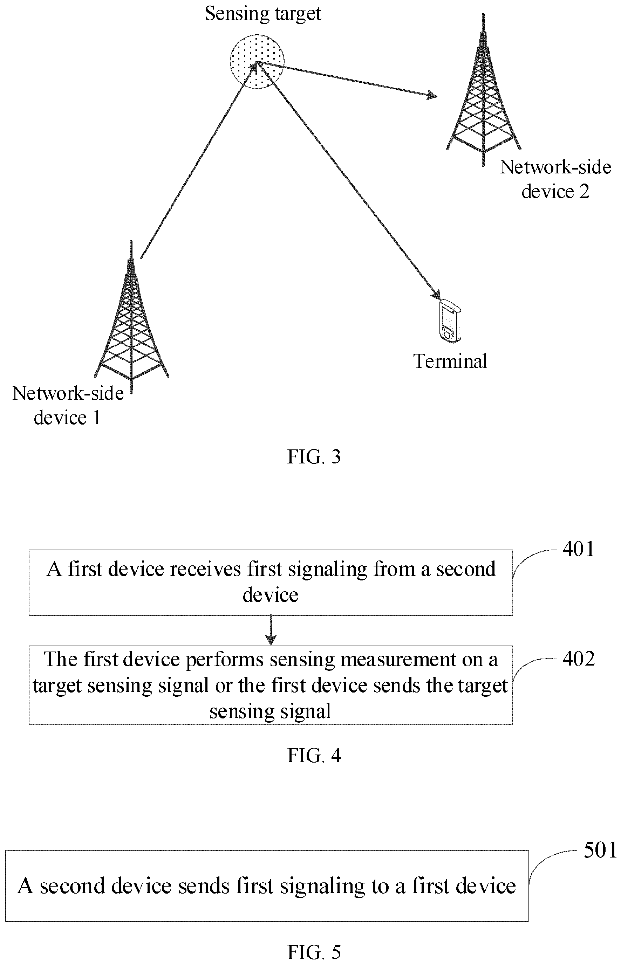

Sensing may be divided into the following several manners.
(1) Active sensing. As shown in FIG. 2, a device performs sensing by using a reflected signal of a signal transmitted by the device, for example, an echo, and a transceiver is located in a same position. Different antennas may be used to sense surrounding environment information of the device.
(2) Passive sensing. As shown in FIG. 3, transceivers are located in different positions, and a receiver performs sensing by using a wireless signal transmitted by a transmitter. For example, a device A senses environment information between the device A and a device B by receiving a wireless signal from the device B.
(3) Interactive sensing: a subject, a time, a frequency, a format, and the like for sending an electromagnetic wave are specified by information interaction between a sensor and a target object, thereby completing a process of sensing.

An integrated sensing and communication design is feasible from the following four aspects:
both a communication system and a sensing system are based on an electromagnetic wave theory, and information is obtained and transferred by transmitting and receiving an electromagnetic wave;
both the communication system and the sensing system have an antenna, a transmitter, a receiver, a signal processor, and another structure, and there is great overlap in hardware resources;
with the development of technologies, there is increasing overlap between the communication system and the sensing system in an operating bandwidth; and
there are similarities in key technologies such as signal modulation, reception detection, and waveform design.

An air interface design of a B5G system or a 6G system will support both a wireless communication signal and a wireless sensing signal, and implement integrated design of communication and sensing functions by using a manner of integrated sensing and communication such as a joint design of signals and/or hardware sharing, to both transfer information and have a sensing ability or provide a sensing service.

Benefits of integrated sensing and communication include the following aspects:
saving costs;
reducing a size of a device;
reducing power consumption of a device;
improving spectral efficiency; and
reducing mutual interference between sensing and communication to improve system performance.

Optionally, a scope of integrated sensing and communication is not clearly defined. Broad-sense integrated sensing and communication includes the following types:
a same network provides a communication service and a sensing service;
a same terminal provides a communication service and a sensing service;
a same spectrum provides a communication service and a sensing service; and
an integrated sensing and communication service is completed in the same radio transmission, that is, a joint design of a communication signal and a sensing signal.

### 2. Reference signal (Reference Signal, RS) of 5G NR

The RS of 5G NR mainly includes the following reference signals:
(1) a downlink (downlink, DL) RS, including a physical downlink shared channel (Physical downlink shared channel, PDSCH) demodulation reference signal (Demodulation Reference Signal, DMRS), a physical downlink control channel (Physical downlink control channel, PDCCH) DMRS, a physical broadcast channel (Physical broadcast channel, PBCH) DMRS, a phase-tracking reference signal (Phase-tracking reference signal, PTRS), a channel state information reference signal (Channel State Information Reference Signal, CSI-RS), a remote interference management reference signal (Remote Interference Management Reference Signal, RIM-RS), and a positioning reference signal (Positioning Reference Signal, PRS);
(2) an uplink (Uplink, UL) RS, including a physical uplink shared channel (Physical Uplink Shared Channel, PUSCH) DMRS, a physical uplink control channel (Physical Uplink Control Channel, PUCCH) DMRS, a PTRS, and a sounding reference signal (Sounding Reference Signal, SRS); and
(3) a sidelink (Sidelink, SL) RS, including a physical sidelink shared channel (Physical Sidelink shared channel, PSSCH) DMRS, a physical sidelink control channel (Physical Sidelink control channel, PSCCH) DMRS, a PSSCH-PTRS, a physical sidelink broadcast channel (Physical Sidelink broadcast channel, PBCH) DMRS, and a CSI-RS.

The following describes in detail a sensing signal transmission processing method provided in the embodiments of this application by using some embodiments and application scenarios thereof with reference to the accompanying drawings.

Referring to FIG. 4, FIG. 4 is a flowchart of a sensing signal transmission processing method according to an embodiment of this application. As shown in FIG. 4, the method includes the following steps.

Step 401: A first device receives first signaling from a second device, where the first signaling is used to indicate a target sensing signal.

Step 402: The first device performs sensing measurement on the target sensing signal or the first device sends the target sensing signal, where
the target sensing signal includes N types of sensing signals, N is a positive integer, and in a case that N is 1, the target sensing signal includes at least two resources.

In this embodiment of this application, the first signaling may be layer 1 signaling. The target sensing signal may include at least one of the following: a reference signal of LTE, a reference signal of NR, a reference signal of a new generation mobile communication system, a sensing signal of a new generation mobile communication system, narrow band Internet of things (Narrow Band Internet of Things, NB-IoT), a reference signal of enhanced machine type communication (Enhanced machine type communication, EMTC), a reference signal and a preamble of Wi-Fi.

It should be noted that a sending device (which may also be referred to as a sending end) of the target sensing signal may include one or more devices, and a receiving device (which may also be referred to as a receive end) of the target sensing signal may include one or more devices. The sending device may be a base station or a terminal device, and the receiving device may be a base station or a terminal device. In addition, the sending device may alternatively be a TRP, an access point (Access Point, AP), a relay (Relay), or a reconfigurable intelligent surface (Reconfigurable Intelligent Surface, RIS).

Optionally, in a case that the first device is the receive end of the target sensing signal, the first device performs sensing measurement on the target sensing signal. The target sensing signal that may be received by the first device may include a sensing signal sent by one or more second devices, or may further include a sensing signal sent by one or more other devices. This is not further limited herein. In this case, the target sensing signal may be a downlink reference signal, an SL reference signal, or a synchronization signal. It should be noted that in this embodiment of this application, there are at least two resources of one type of sensing signal on which the first device needs to perform sensing measurement, and each resource includes one or more ports; or the first device needs to perform sensing measurement on at least two types of sensing signals, and each type of sensing signal includes one or more resources, such as a PTRS resource with a period of 20 ms and a PRS resource with a period of 20 ms.

Optionally, in a case that the first device is the sending end of the target sensing signal, the first device sends the target sensing signal. The first device may send the target sensing signal to one or more second devices, or may send the target sensing signal to one or more other devices. For example, in a side-link communication scenario, the sending end may receive first signaling sent by a control node (for example, a terminal or a network-side device), and then sends a target sensing signal to one or more receive ends. In this case, the target sensing signal may be an uplink reference signal or an SL reference signal. It should be noted that in this embodiment of this application, the first device needs to send a sensing signal on at least two resources of one type of sensing signal, and each resource includes one or more ports; or the first device needs to send at least two types of sensing signals, and each type of sensing signal includes one or more resources, such as a PTRS resource with a period of 20 ms and a PRS resource with a period of 20 ms.

In this embodiment of this application, the first signaling may be specifically used to indicate at least one of the following:
at least two resources of one type of sensing signal; and
at least one type of sensing signal.

In a case that the first signaling indicates at least two resources of a specific type of sensing signal, this type of sensing signal is received or sent only on the resources indicated by the first signaling. In this case, the at least two resources that are indicated may be at least some of at least two resources preconfigured for this type of sensing signal. In a case that the first signaling indicates a specific type of sensing signal, this type of sensing signal may be received or sent on all resources preconfigured for this type of sensing signal.

In this embodiment of this application, the first device receives the first signaling from the second device, where the first signaling is used to indicate the target sensing signal; and the first device performs sensing measurement on the target sensing signal or the first device sends the target sensing signal, where the target sensing signal includes N types of sensing signals, N is a positive integer, and in a case that N is 1, the target sensing signal includes at least two resources. The embodiments of this application clarified that at least one type of sensing signal is sent or detected, thereby implementing sensing measurement. In addition, at least two types of sensing signals are sent or received, or a sensing signal is received or sent on at least two resources, so that when sensing detection is performed based on the sensing signal, a resolution of sensing can be improved, thereby improving sensing performance.

Optionally, in some embodiments, before the first device receives the first signaling from the second device, the method further includes:
receiving, by the first device, second signaling from the second device, where the second signaling carries configuration information of at least one type of sensing signal or configuration information of at least one resource of one type of sensing signal.

In this embodiment of this application, there may be one or more pieces of second signaling, and each piece of second signaling may indicate configuration information of at least one type of sensing signal, or indicate configuration information of one or more resources of one type of sensing signal. As specifically shown in Table 1 or Table 2, the configuration information may include a type of the sensing signal (for example, a CSI-RS or a PTRS), time-frequency domain resources, a number of ports, and the like.

**Table 1:**

| Index of Signaling | Type of Reference Signal | Time Domain Resource | Frequency Domain Resource | Other Information |
|---|---|---|---|---|
| 1 | CSI-RS | First time domain resource (including a period and a time domain shift) | First frequency domain resource | |
| 2 | CSI-RS | Second time domain resource (including a period and a time | Second frequency domain | |

| | | domain shift) | resource | |
|---|---|---|---|---|
| 3 | PTRS | Third time domain resource (including a period and a time domain shift) | Third frequency domain resource | |
| 4 | PSS | - | - | |
| 5 | ... | ... | ... | |

**Table 2:**

| Index of Signaling | Type of Reference Signal | Time Domain Resource | Frequency Domain Resource | Other Information |
|---|---|---|---|---|
| 1 | SRS | First time domain resource (including a period and a time domain shift) | First frequency domain resource | |
| 2 | PTRS | Second time domain resource (including a period and a time domain shift) | Second frequency domain resource | |
| 3 | PTRS | Third time domain resource (including a period and a time domain shift) | Third frequency domain resource | |
| 4 | ... | ... | ... | |

Optionally, the second signaling may be radio resource control (Radio Resource Control, RRC) signaling.

Optionally, in some embodiments, the target sensing signal is at least some of sensing signals associated with the second signaling. In other words, in this embodiment of this application, the target sensing signal that is sent or received is a subset or a complete set of a sensing signal configured for the second signaling.

Optionally, in some embodiments, the first signaling or the second signaling is further used to indicate at least one of the following:
a power difference between the sensing signals of different types;
a power difference between the sensing signals with different resources; and
a quasi-co-location (Quasi co-location, QCL) relationship between the sensing signals.

Statement of quasi co-location: if a property of a channel on a symbol of a specific antenna port can be inferred from another antenna port, these two ports are considered to be quasi co-located, and a channel estimation result obtained from one port can be used for another port. For example, it can be considered that these two ports come from a same transmission source. QCL configuration may include a plurality of different types of signals, such as a CSI-RS and a synchronization signal block (Synchronization Signal Block, SSB) or an SRS. A network-side device may configure corresponding QCL configuration for different beams. The network-side device may change, by changing QCL configuration of a terminal, a beam in which the terminal works.

There are four types of QCL in a 5G system, as specifically shown in Table 3 below.

**Table 3:**

| Type | Property | Function |
|---|---|---|
| QCL-TypeA | Doppler shift, Doppler spread, average delay, delay spread | Obtaining channel estimation information |
| QCL-TypeB | Doppler shift, Doppler spread | Obtaining channel estimation information |
| QCL-TypeC | Doppler shift, average delay | Obtaining measurement information such as RSRP |
| QCL-TypeD | Spatial Rx (Rx receive) parameter | Assisting terminal beamforming |

For the power difference between the sensing signals of different types or the power difference between the sensing signals with different resources, in some embodiments, an energy per resource element (Energy per resource element, EPRE) ratio of the target sensing signal to a base reference signal may be indicated. The base reference signal may be prescribed by a protocol or configured by the second device.

It should be noted that in a case that the first device is the receive end of the target sensing signal, the first device may detect the target sensing signal indicated in the first signaling to obtain a corresponding sensing measurement quantity. In some embodiments, after the first device performs sensing measurement on the target sensing signal, the method further includes:
reporting, by the first device, measurement information of a target sensing measurement quantity, where the target sensing measurement quantity includes at least one of the following sensing measurement quantities: a channel matrix, channel state information, reference signal received power (Reference Signal Received Power, RSRP), a received signal strength indication (Received Signal Strength Indication, RSSI), a channel power delay profile (power delay profile, PDP), a Doppler power spectrum, Doppler spread, a coherence bandwidth, a coherence time, power of at least one path of a multipath channel, a delay of the at least one path of the multipath channel, an angle of the at least one path of the multipath channel, a Doppler frequency shift, a quotient of frequency domain channel responses of a first antenna and a second antenna, a conjugate product of the frequency domain channel responses of the first antenna and the second antenna, an amplitude ratio between received signals of the first antenna and the second antenna, an amplitude difference between the received signals of the first antenna and the second antenna, a phase difference between the first antenna and the second antenna, and angle-related information of the first antenna and the second antenna, where
the first antenna and the second antenna are receive antennas of the first device.

The measurement information of the sensing measurement quantity may alternatively be a measurement quantity obtained through simple operation of at least one of the foregoing items, or a measurement quantity obtained through complex operation of at least one of the foregoing items. The simple operation may include addition, subtraction, multiplication, division, matrix addition, subtraction and multiplication, matrix transpose, trigonometric function operation, square root operation, exponentiation, a threshold detection result and a maximum/minimum value extraction result of a result of the operation, and the like. The complex operation includes fast Fourier transform (Fast Fourier Transform, FFT)/inverse fast Fourier transform (Inverse Fast Fourier Transform, IFFT), discrete Fourier transform (Discrete Fourier Transform, DFT)/inverse discrete Fourier transform (Inverse Discrete Fourier Transform, IDFT), 2D-FFT, 3D-FFT, matched filtering, autocorrelation operation, wavelet transform, digital filtering, a threshold detection result and a maximum/minimum value extraction result of a result of the operation, and the like.

Optionally, in this embodiment of this application, the at least one path includes at least a first-arrival path, a line of sight (Line of Sight, LOS) path, a first-order reflection path, and a multi-order reflection path. In some embodiments, the at least one path of the multipath channel may be replaced by each path of the multipath channel. To be specific, the target sensing measurement quantity may include at least one of power of each path of the multipath channel, a delay of each path of the multipath channel, and an angle of each path of the multipath channel.

Optionally, the channel state information may include at least one of an amplitude of the frequency domain channel response, a phase of the frequency domain channel response, and signal characteristics of an I-channel and a Q-channel of the frequency domain channel response. The signal characteristics of the I-channel and the Q-channel may include signal amplitudes of the I-channel and the Q-channel.

Optionally, the angle-related information may include an angle of arrival and an angle of departure. Specifically, the angle-related information may include angle information of a terminal side, angle information of a network side, and angle information of a reflection point.

It should be understood that a specific definition of the sensing measurement quantity may be prescribed by a protocol. Sensing measurement quantities corresponding to different sensing signals may be the same or different.

Optionally, in some embodiment, the method further includes:
receiving, by the first device, feedback configuration information corresponding to the target sensing measurement quantity from the second device, where
the feedback configuration information includes at least one of the following:
   a time domain resource for feeding back the target sensing measurement quantity;
   a frequency domain resource for feeding back the target sensing measurement quantity; and
   a granularity or a step for feeding back the target sensing measurement quantity.

Optionally, in some embodiment, the reporting, by the first device, measurement information of a target sensing measurement quantity includes:
reporting, by the first device, the measurement information of the target sensing measurement quantity to a target device, where the target device is the second device or a third device associated with the second device.

In the embodiments of this application, if the second device is a base station, the target device may be the second device or the third device, and the third device may be a core network, a sensing network element of the core network, or a sensing network function of the core network. If the second device is a terminal, the target device may be the second device.

Optionally, in a case that the target device is the second device, after receiving the measurement information of the target sensing measurement quantity, the second device may convert the measurement information of the target sensing measurement quantity into a sensing result (that is, it can be understood as converting the sensing measurement quantity into a sensing result, or converting the measurement information of the sensing measurement quantity into a sensing result), and send the sensing result to a sensing demander, or the second device forwards the received measurement information of the target sensing measurement quantity to the third device, and the third device converts the measurement information of the target sensing measurement quantity into a sensing result, and sends the sensing result to the sensing demander. Optionally, in a case that the target device is the third device, after receiving the measurement information of the target sensing measurement quantity, the third device may convert the measurement information of the target sensing measurement quantity into a sensing result, and send the sensing result to a sensing demander, or the third device forwards the received measurement information of the target sensing measurement quantity to the second device, and the second device converts the measurement information of the target sensing measurement quantity into a sensing result, and sends the sensing result to the sensing demander. The sensing demander may be understood as a device that makes a request for sensing measurement or triggers sensing measurement, which may be a sending end of a sensing signal, a receive end of the sensing signal, or another device. This is not further limited herein.

Further, the sensing demander may send a sensing demand to the third device, and the third device sends the sensing demand or target information to the second device. The target information includes at least one of sensing signal configuration corresponding to the sensing demand and a sensing measurement quantity that needs to be measured by the first device.

Optionally, in some embodiment, the measurement information of the target sensing measurement quantity includes at least one of the following:
first measurement information corresponding to at least one first sensing measurement quantity, where the first sensing measurement quantity is one of the target sensing measurement quantity, and first measurement information corresponding to each first sensing measurement quantity includes at least one of the following: index values of M sensing signals, where the M sensing signals are all sensing signals corresponding to the first sensing measurement quantity, and M is an integer greater than 1; and a measurement value of the sensing signal corresponding to each index value; and
second measurement information corresponding to at least one second sensing measurement quantity, where the second sensing measurement quantity is one of the target sensing measurement quantity, and second measurement information corresponding to each second sensing measurement quantity is associated with all sensing signals corresponding to the second sensing measurement quantity.

In this embodiment of this application, a feedback rule for the first sensing measurement quantity may be understood as respectively feeding back values of different sensing measurement quantities corresponding to sensing signals with different indexes, and corresponding index values of the sensing signals. A feedback rule for the second sensing measurement quantity may be understood as j ointly reporting a value of a sensing measurement quantity corresponding to sensing signals with different indexes. It should be understood that a method for jointing sensing measurement quantities of sensing signals with different indexes may be set according to an actual need. For example, in some embodiments, the second measurement information corresponding to the second sensing measurement quantity may be obtained based on any of the following methods.
1. Different sensing signals are sensed independently, and sensing measurement quantities are averaged or a sensing measurement quantity corresponding to one of the sensing signals is selected. A selection criterion may be that a sensing signal-to-noise and interference ratio (signal-to-noise and interference ratio, SINK) satisfies a threshold or the best sensing SINK is selected. The threshold is notified by the second device to the first device in advance.
2. Joint signal processing is performed on a plurality of sensing signals to obtain a sensing measurement quantity. For example, during radar signal processing, a joint matched filter is designed for a plurality of sensing signals to obtain a sensing measurement quantity. This method can achieve greater signal processing gain.
3. Different sensing measurement quantities are respectively sensed for a plurality of sensing signals. For example, a DMRS has a high density in frequency and may be used to perform distance measurement (where a range of the distance measurement is large), and a PTRS has a high density in time and may be used to perform speed measurement (where a range of the speed measurement is large).

It should be understood that if the first measurement information includes only the index values of the M sensing signals, it may be understood that a reported measurement value of a sensing signal corresponding to an index value satisfies a preset requirement, for example, is greater than or equal to the preset value, or is less than or equal to the preset value.

It should be noted that in a case that the first device is the sending end of the target sensing signal, the second device may receive a target sensing measurement quantity that needs to be fed back to the third device and that is notified by the third device. The first device may send the target sensing signal indicated by the first signaling, and then the second device measures the target sensing signal to obtain a corresponding target sensing measurement quantity. The third device may be a core network or a network element of the core network.

In this embodiment, the second device may report the measurement information of the target sensing measurement quantity to the third device.

Optionally, the third device may convert the measurement information of the target sensing measurement quantity into a sensing result, and then the third device may send the sensing result to a sensing demander. The sensing demander may be understood as a device that makes a request for sensing measurement or triggers sensing measurement, which may be a sending end of a sensing signal, a receive end of the sensing signal, or another device. This is not further limited herein.

Further, the sensing demander may send a sensing demand to the third device, and the third device sends the sensing demand or target information to the second device. The target information includes at least one of sensing signal configuration corresponding to the sensing demand and a sensing measurement quantity that needs to be measured by the second device.

Optionally, in some embodiments, the method further includes:
sending, by the first device, assistance information to the second device, where
in a case that the first device performs sensing measurement on the target sensing signal, the assistance information is used to indicate at least one of a type, a resource, and configuration information of a sensing signal that is expected to be sent by the second device; and
in a case that the first device sends the target sensing signal, the assistance information is used to indicate at least one of a type, a resource, and configuration information of a sensing signal that the first device expects to send.

In this embodiment of this application, in a case that the sensing demander is assumed to be the first device (for example, a terminal), the first device learns better than the second device configuration information of a sensing signal associated with the sensing demand. In this case, the first device sends assistance information to a base station, that is, recommends to the second device configuration information of a sensing signal corresponding to the sensing demand, which can improve sensing accuracy or sensing performance and better satisfy the sensing demand.

Optionally, in some embodiments, the method further includes:
reporting, by the first device, capability information to a target device, where the capability information is used to indicate at least one of the following:
a type of a sensing signal on which the first device is able to simultaneously perform sensing measurement;
a number of the sensing signal on which the first device is able to simultaneously perform sensing measurement;
a number of resources that the first device is able to simultaneously perform sensing measurement; and
parameter information that the first device is able to simultaneously perform sensing measurement; where
the target device is the second device or a third device associated with the second device.

For better understanding of this application, a detailed description is given below with some specific some embodiments.

Embodiment 1: In scenario 1, UE (namely, a first device) detects a plurality of downlink reference signals, SL reference signals, or synchronization signals according to indications of first signaling and second signaling sent by a base station (a second device). In scenario 2, a first base station (namely, a first device) detects a plurality of downlink reference signals or synchronization signals according to indications of first signaling and second signaling sent by a second base station (namely, a second device).

Scenario 1 is used as an example for description, including the following process steps.

The UE receives the first signaling (for example, layer 1 signaling) sent by the base station, where the first signaling indicates any of the following:
a plurality of resources of one type of sensing signal on which the UE needs to perform sensing measurement, where each resource includes one or more ports (port), for example, two resources of a CSI-RS, where each resource includes 4 ports; and
a plurality of types of sensing signals on which the UE needs to perform sensing measurement, where each type of sensing signal includes one or more resources, such as a PTRS resource with a period of 20 ms and a PRS resource with a period of 20 ms.

The sensing signals include at least two of DL and SL reference signals of LTE; or at least two of DL and SL reference signals of NR; or a reference signal or a sensing signal of a new generation mobile communication system (for example, a reference signal and a sensing signal of 6G); or reference signals between different systems (for example, a reference signal of NR and a sensing signal of 6G; for another example, a CSI-RS of 5G and a CRS of 4G); reference signals of NB-IoT; reference signals of EMTC; various reference signals and preambles of Wi-Fi, or the like.

Optionally, the sensing signals may be sent by different APs, different base stations, or different TRPs.

Optionally, before the UE receives the first signaling sent by the base station, the UE may receive (one or more pieces of) second signaling sent by the base station, where a piece of the second signaling may indicate configuration information of at least one type of sensing signal, or indicate configuration information of one or more resources of one type of sensing signal. The configuration information includes a type of the sensing signal (for example, a CSI-RS or a PTRS), time-frequency domain resources, a number of ports, and the like. The sensing signal is a downlink reference signal or a sidelink reference signal.

Optionally, the first signaling or the second signaling further indicates at least one of the following:
power difference between target sensing signals of a same type or power difference between target sensing signals with different resources, for example, an EPRE ratio of the target sensing signal to a base reference signal, where the base reference signal is prescribed by a protocol or configured by the base station; and
a QCL relationship between the target sensing signals.

Optionally, the UE detects a target sensing signal indicated by the first signaling to obtain a corresponding sensing measurement quantity. The target sensing signal is sent by the second device or another device.

Optionally, before the UE detects the target sensing signal indicated by the first signaling to obtain the corresponding sensing measurement quantity, the UE may receive a target sensing measurement quantity that needs to be fed back by the UE and that is indicated by the base station by using the first signaling or other signaling.

The target sensing measurement quantity includes at least one of the following sensing measurement quantities: a channel matrix, channel state information, reference signal received power, a received signal strength indication, a channel power delay profile, a Doppler power spectrum, Doppler spread, a coherence bandwidth, a coherence time, power of each path of a multipath channel, a delay of each path of the multipath channel, an angle of each path of the multipath channel, a Doppler frequency shift, a quotient of frequency domain channel responses of a first antenna and a second antenna, a conjugate product of the frequency domain channel responses of the first antenna and the second antenna, an amplitude ratio between received signals of the first antenna and the second antenna, an amplitude difference between the received signals of the first antenna and the second antenna, a phase difference between the first antenna and the second antenna, and angle-related information of the first antenna and the second antenna, where
the first antenna and the second antenna are receive antennas of the first device.

Optionally, it should be understood that a specific definition of the sensing measurement quantity may be prescribed by a protocol. Sensing measurement quantities corresponding to different sensing signals may be the same or different.

Optionally, before the UE detects the target sensing signal indicated by the first signaling to obtain the corresponding sensing measurement quantity, the UE may receive feedback configuration information of a sensing measurement quantity indicated by the base station by using the first signaling or other signaling. The feedback configuration information includes at least one of the following:
a time domain resource for feeding back the target sensing measurement quantity;
a frequency domain resource for feeding back the target sensing measurement quantity; and
a granularity or a step for feeding back the target sensing measurement quantity.

Optionally, the UE feeds back a value of a sensing measurement quantity to the second device or a third device. The third device may be a sensing network element or a sensing network function of a core network.

A feedback rule may include at least one of the following:
respectively feeding back values of different sensing measurement quantities corresponding to sensing signals with different indexes, and corresponding indexes of the sensing signals; and
jointly reporting a value of a sensing measurement quantity corresponding to sensing signals with different indexes.

Optionally, the second device converts the sensing measurement quantity into a sensing result. Alternatively, the second device reports the sensing measurement quantity to the third device, and the third device converts the sensing measurement quantity into a sensing result.

Optionally, the second device or the third device sends the sensing result to a sensing demander.

Optionally, before the UE receives the first signaling sent by the base station, the sensing demander sends a sensing demand to the third device. The third device sends the sensing demand or target information to the second device. The target information includes at least one of sensing signal configuration corresponding to the sensing demand and a sensing measurement quantity that needs to be measured by the first device.

Embodiment 2: In scenario 1, UE (namely, a first device) sends a plurality of uplink reference signals according to an indication of third signaling sent by a base station (namely, a second device), and the base station detects the plurality of uplink reference signals. In scenario 2, UE A (namely, a first device) sends a plurality of SL reference signals according to an indication of third signaling sent by a base station (that is, a second device), and UE B detects the plurality of SL reference signals.

Scenario 1 is used as an example for description, including the following process steps.

The first device receives the third signaling (for example, layer 1 signaling) sent by the second device. The third signaling indicates an index of a target sensing signal that needs to be sent by the first device. The index of the target sensing signal is a subset or a complete set of an index of a sensing signal corresponding to an indication of fourth signaling. The third signaling indicates any of the following:
a plurality of resources of one type of target sensing signal that are used for sensing and that need to be sent by the first device, where each resource includes one or more ports (port); and
a plurality of types of target sensing signals that are used for sensing and that need to be sent by the first device.

A definition of the sensing signal may refer to Embodiment 1, and is not described herein again.

Optionally, before the UE receives first signaling sent by the base station, the UE may receive (one or more pieces of) fourth signaling sent by the base station, where a piece of the fourth signaling may indicate configuration information of at least one type of sensing signal, or indicate configuration information of one or more resources of one type of sensing signal. The configuration information includes a type of the sensing signal (for example, a CSI-RS or a PTRS), time-frequency domain resources, a number of ports, and the like. The sensing signal is an uplink reference signal or a sidelink reference signal.

Optionally, the third signaling or the fourth signaling further indicates at least one of the following:
power difference between target sensing signals of a same type or power difference between target sensing signals with different resources, for example, an EPRE ratio of the target sensing signal to a base reference signal, where the base reference signal is prescribed by a protocol or configured by the base station; and
a QCL relationship between the target sensing signals.

Optionally, the first device sends a corresponding target sensing signal according to an indication of the third signaling.

Optionally, the second device detects a target reference signal indicated by the third signaling to obtain a corresponding sensing measurement quantity.

Optionally, before the second device detects the target reference signal indicated by the third signaling to obtain the corresponding sensing measurement quantity, the second device may receive a target sensing measurement quantity that needs to be fed back by the second device to a third device (for example, a core network element) and that is notified by the third device.

A definition of the target sensing measurement quantity may refer to Embodiment 1, and is not described herein again.

Optionally, the second device may feed back a value of the target sensing measurement quantity to the third device. A feedback rule may include at least one of the following:
respectively feeding back values of different sensing measurement quantities corresponding to sensing signals with different indexes, and corresponding indexes of the sensing signals; and
jointly reporting a value of a sensing measurement quantity corresponding to sensing signals with different indexes.

Optionally, the second device or the third device converts the sensing measurement quantity into a sensing result. Alternatively, the second device reports the sensing measurement quantity to the third device, and the third device converts the sensing measurement quantity into a sensing result.

Optionally, the third device may send the sensing result to a sensing demander.

Optionally, before the first device receives the third signaling sent by the second device, the sensing demander may send a sensing demand to the third device. The third device sends the sensing demand or target information to the second device. The target information includes at least one of sensing signal configuration corresponding to the sensing demand and a sensing measurement quantity that needs to be measured by the second device.

Referring to FIG. 5, FIG. 5 is another flowchart of a sensing signal transmission processing method according to an embodiment of this application. As shown in FIG. 5, the method includes the following steps.

Step 501: A second device sends first signaling to a first device, where the first signaling is used to indicate a target sensing signal on which the first device performs sensing measurement, or to indicate the first device to send the target sensing signal, where
the target sensing signal includes N types of sensing signals, N is a positive integer, and in a case that N is 1, the target sensing signal includes at least two resources.

Optionally, before the second device sends the first signaling to the first device, the method further includes:
sending, by the second device, second signaling to the first device, where the second signaling carries configuration information of at least one type of sensing signal or configuration information of at least one resource of one type of sensing signal.

Optionally, the target sensing signal is at least some of sensing signals associated with the second signaling.

Optionally, the first signaling or the second signaling is further used to indicate at least one of the following:
a power difference between the sensing signals of different types;
a power difference between the sensing signals with different resources; and
a quasi-co-location QCL relationship between the sensing signals.

Optionally, the method further includes:
receiving, by the second device, measurement information of a target sensing measurement quantity, where the target sensing measurement quantity includes at least one of the following sensing measurement quantities: a channel matrix, channel state information, reference signal received power, a received signal strength indication, a channel power delay profile, a Doppler power spectrum, Doppler spread, a coherence bandwidth, a coherence time, power of at least one path of a multipath channel, a delay of the at least one path of the multipath channel, an angle of the at least one path of the multipath channel, a Doppler frequency shift, a quotient of frequency domain channel responses of a first antenna and a second antenna, a conjugate product of the frequency domain channel responses of the first antenna and the second antenna, an amplitude ratio between received signals of the first antenna and the second antenna, an amplitude difference between the received signals of the first antenna and the second antenna, a phase difference between the first antenna and the second antenna, and angle-related information of the first antenna and the second antenna, where
the first antenna and the second antenna are receive antennas of a receive end of the target sensing signal.

Optionally, the method further includes:
sending, by the second device, feedback configuration information corresponding to the target sensing measurement quantity, where
the feedback configuration information includes at least one of the following:
   a time domain resource for feeding back the target sensing measurement quantity;
   a frequency domain resource for feeding back the target sensing measurement quantity; and
   a granularity or a step for feeding back the target sensing measurement quantity.

Optionally, the measurement information of the target sensing measurement quantity includes at least one of the following:
first measurement information corresponding to at least one first sensing measurement quantity, where the first sensing measurement quantity is one of the target sensing measurement quantity, and first measurement information corresponding to each first sensing measurement quantity includes at least one of the following: index values of M sensing signals, where the M sensing signals are all sensing signals corresponding to the first sensing measurement quantity, and M is an integer greater than 1; and a measurement value of the sensing signal corresponding to each index value; and
second measurement information corresponding to at least one second sensing measurement quantity, where the second sensing measurement quantity is one of the target sensing measurement quantity, and second measurement information corresponding to each second sensing measurement quantity is associated with all sensing signals corresponding to the second sensing measurement quantity.

Optionally, after the second device receives the measurement information of the target sensing measurement quantity, the method further includes:
forwarding, by the second device, the measurement information of the target sensing measurement quantity to a third device associated with the second device.

Optionally, the method further includes:
receiving, by the second device, assistance information from the first device; where
in a case that the first signaling is used to indicate the target sensing signal on which the first device performs sensing measurement, the assistance information is used to indicate at least one of a type, a resource, and configuration information of a sensing signal that is expected to be sent by the second device; and
in a case that the first signaling is used to indicate the first device to send the target sensing signal, the assistance information is used to indicate at least one of a type, a resource, and configuration information of a sensing signal that the first device expects to send.

Optionally, the method further includes:
receiving, by the second device, capability information from the first device, where the capability information is used to indicate at least one of the following:
a type of a sensing signal on which the first device is able to simultaneously perform sensing measurement;
a number of the sensing signal on which the first device is able to simultaneously perform sensing measurement;
a number of resources that the first device is able to simultaneously perform sensing measurement; and
parameter information that the first device is able to simultaneously perform sensing measurement; where
the target device is the second device or a third device associated with the second device.

It should be noted that this embodiment is used as an implementation of the second device corresponding to the embodiment shown in FIG. 4. For specific implementations of this embodiment, reference may be made to the related descriptions of the embodiment shown in FIG. 4, and same beneficial effects are achieved. To avoid repetition, details are not described herein again.

It should be noted that the sensing signal transmission processing method provided in the embodiments of this application may be performed by a sensing signal transmission processing apparatus, or a control module configured to perform the sensing signal transmission processing method in the sensing signal transmission processing apparatus. In the embodiments of this application, the sensing signal transmission processing apparatus provided in the embodiments of this application is described by using an example in which the sensing signal transmission processing apparatus performs the sensing signal transmission processing method.

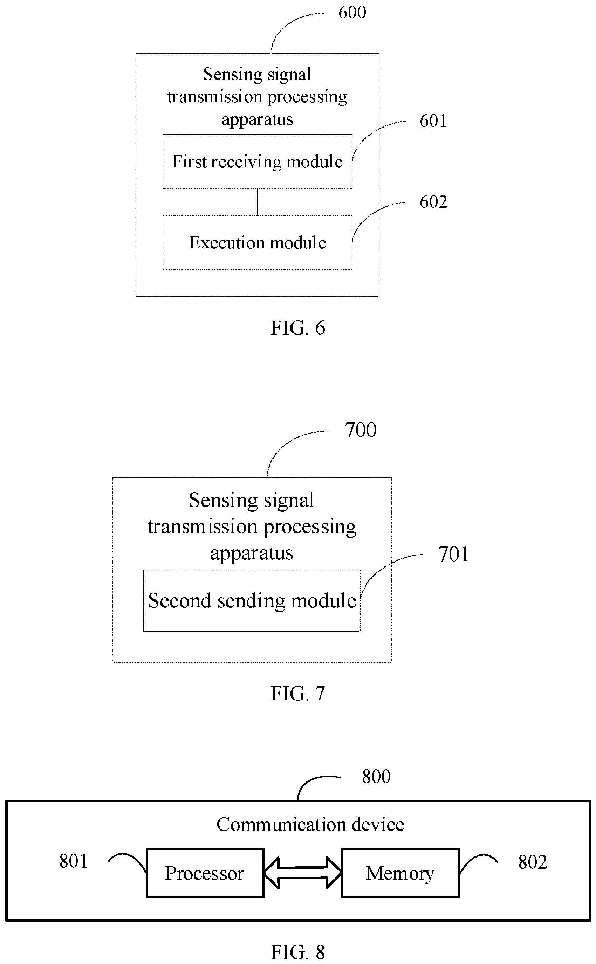

Referring to FIG. 6, FIG. 6 is a structural diagram of a sensing signal transmission processing apparatus according to an embodiment of this application. As shown in FIG. 6, the sensing signal transmission processing apparatus 600 includes:
a first receiving module 601, configured to receive first signaling from a second device, where the first signaling is used to indicate a target sensing signal; and
an execution module 602 configured to perform sensing measurement on the target sensing signal or send the target sensing signal, where
the target sensing signal includes N types of sensing signals, N is a positive integer, and in a case that N is 1, the target sensing signal includes at least two resources.

Optionally, the first receiving module 601 is further configured to receive second signaling from the second device, where the second signaling carries configuration information of at least one type of sensing signal or configuration information of at least one resource of one type of sensing signal.

Optionally, the target sensing signal is at least some of sensing signals associated with the second signaling.

Optionally, the first signaling or the second signaling is further used to indicate at least one of the following:
a power difference between the sensing signals of different types;
a power difference between the sensing signals with different resources; and
a quasi-co-location QCL relationship between the sensing signals.

Optionally, in a case that the execution module 602 is configured to perform sensing measurement on the target sensing signal, the sensing signal transmission processing apparatus 600 further includes:
a first sending module, configured to report measurement information of a target sensing measurement quantity, where the target sensing measurement quantity includes at least one of the following sensing measurement quantities: a channel matrix, channel state information, reference signal received power, a received signal strength indication, a channel power delay profile, a Doppler power spectrum, Doppler spread, a coherence bandwidth, a coherence time, power of at least one path of a multipath channel, a delay of the at least one path of the multipath channel, an angle of the at least one path of the multipath channel, a Doppler frequency shift, a quotient of frequency domain channel responses of a first antenna and a second antenna, a conjugate product of the frequency domain channel responses of the first antenna and the second antenna, an amplitude ratio between received signals of the first antenna and the second antenna, an amplitude difference between the received signals of the first antenna and the second antenna, a phase difference between the first antenna and the second antenna, and angle-related information of the first antenna and the second antenna, where
the first antenna and the second antenna are receive antennas of a receive end of the target sensing signal.

Optionally, the first receiving module 601 is further configured to receive feedback configuration information corresponding to the target sensing measurement quantity from the second device, where
the feedback configuration information includes at least one of the following:
a time domain resource for feeding back the target sensing measurement quantity;
a frequency domain resource for feeding back the target sensing measurement quantity; and
a granularity or a step for feeding back the target sensing measurement quantity.

Optionally, the reporting, by the first device, measurement information of a target sensing measurement quantity includes:
reporting, by the first device, the measurement information of the target sensing measurement quantity to a target device, where the target device is the second device or a third device associated with the second device.

Optionally, the measurement information of the target sensing measurement quantity includes at least one of the following:
first measurement information corresponding to at least one first sensing measurement quantity, where the first sensing measurement quantity is one of the target sensing measurement quantity, and first measurement information corresponding to each first sensing measurement quantity includes at least one of the following: index values of M sensing signals, where the M sensing signals are all sensing signals corresponding to the first sensing measurement quantity, and M is an integer greater than 1; and a measurement value of the sensing signal corresponding to each index value; and
second measurement information corresponding to at least one second sensing measurement quantity, where the second sensing measurement quantity is one of the target sensing measurement quantity, and second measurement information corresponding to each second sensing measurement quantity is associated with all sensing signals corresponding to the second sensing measurement quantity.

Optionally, the sensing signal transmission processing apparatus 600 further includes:
a first sending module, configured to send assistance information to a target device, where
the target device is the second device or a third device associated with the second device, and in a case that the first device performs sensing measurement on the target sensing signal, the assistance information is used to indicate at least one of a type, a resource, and configuration information of a sensing signal that is expected to be sent by the second device; and
in a case that the first device sends the target sensing signal, the assistance information is used to indicate at least one of a type, a resource, and configuration information of a sensing signal that the first device expects to send.

Optionally, the sensing signal transmission processing apparatus 600 further includes:
a first sending module, configured to report capability information to a target device, where the capability information is used to indicate at least one of the following:
a type of a sensing signal on which the first device is able to simultaneously perform sensing measurement;
a number of the sensing signal on which the first device is able to simultaneously perform sensing measurement;
a number of resources that the first device is able to simultaneously perform sensing measurement; and
parameter information that the first device is able to simultaneously perform sensing measurement.

The sensing signal transmission processing apparatus provided in this embodiment of this application can implement the processes in the method embodiment in FIG. 4. To avoid repetition, details are not described herein again.

Referring to FIG. 7, FIG. 7 is a structural diagram of a sensing signal transmission processing apparatus according to an embodiment of this application. As shown in FIG. 7, the sensing signal transmission processing apparatus 700 includes:
a second sending module 701, configured to send first signaling to a first device, where the first signaling is used to indicate a target sensing signal on which the first device performs sensing measurement, or to indicate the first device to send the target sensing signal, where
the target sensing signal includes N types of sensing signals, N is a positive integer, and in a case that N is 1, the target sensing signal includes at least two resources.

Optionally, the second sending module 701 is further configured to send second signaling, where the second signaling carries configuration information of at least one type of sensing signal or configuration information of at least one resource of one type of sensing signal.

Optionally, the target sensing signal is at least some of sensing signals associated with the second signaling.

Optionally, the first signaling or the second signaling is further used to indicate at least one of the following:
a power difference between the sensing signals of different types;
a power difference between the sensing signals with different resources; and
a quasi-co-location QCL relationship between the sensing signals.

Optionally, in a case that the first signaling is used to indicate the target sensing signal on which the first device performs sensing measurement, the sensing signal transmission processing apparatus 700 further includes:
a second receiving module, configured to receive measurement information of a target sensing measurement quantity, where the target sensing measurement quantity includes at least one of the following sensing measurement quantities: a channel matrix, channel state information, reference signal received power, a received signal strength indication, a channel power delay profile, a Doppler power spectrum, Doppler spread, a coherence bandwidth, a coherence time, power of at least one path of a multipath channel, a delay of the at least one path of the multipath channel, an angle of the at least one path of the multipath channel, a Doppler frequency shift, a quotient of frequency domain channel responses of a first antenna and a second antenna, a conjugate product of the frequency domain channel responses of the first antenna and the second antenna, an amplitude ratio between received signals of the first antenna and the second antenna, an amplitude difference between the received signals of the first antenna and the second antenna, a phase difference between the first antenna and the second antenna, and angle-related information of the first antenna and the second antenna, where
the first antenna and the second antenna are receive antennas of a receive end of the target sensing signal.

Optionally, the second sending module 701 is further configured to send feedback configuration information corresponding to the target sensing measurement quantity, where
the feedback configuration information includes at least one of the following:
a time domain resource for feeding back the target sensing measurement quantity;
a frequency domain resource for feeding back the target sensing measurement quantity; and
a granularity or a step for feeding back the target sensing measurement quantity.

Optionally, the measurement information of the target sensing measurement quantity includes at least one of the following:
first measurement information corresponding to at least one first sensing measurement quantity, where the first sensing measurement quantity is one of the target sensing measurement quantity, and first measurement information corresponding to each first sensing measurement quantity includes at least one of the following: index values of M sensing signals, where the M sensing signals are all sensing signals corresponding to the first sensing measurement quantity, and M is an integer greater than 1; and a measurement value of the sensing signal corresponding to each index value; and
second measurement information corresponding to at least one second sensing measurement quantity, where the second sensing measurement quantity is one of the target sensing measurement quantity, and second measurement information corresponding to each second sensing measurement quantity is associated with all sensing signals corresponding to the second sensing measurement quantity.

Optionally, the second sending module 701 is further configured to forward the measurement information of the target sensing measurement quantity to a third device.

Optionally, the sensing signal transmission processing apparatus 700 further includes:
a second receiving module, configured to receive assistance information from the first device; where
in a case that the first signaling is used to indicate the target sensing signal on which the first device performs sensing measurement, the assistance information is used to indicate at least one of a type, a resource, and configuration information of a sensing signal that is expected to be sent by the second device; and
in a case that the first signaling is used to indicate the first device to send the target sensing signal, the assistance information is used to indicate at least one of a type, a resource, and configuration information of a sensing signal that the first device expects to send.

Optionally, the sensing signal transmission processing apparatus 700 further includes:
a second receiving module, configured to receive capability information from the first device, where the capability information is used to indicate at least one of the following:
a type of a sensing signal on which the first device is able to simultaneously perform sensing measurement;
a number of the sensing signal on which the first device is able to simultaneously perform sensing measurement;
a number of resources that the first device is able to simultaneously perform sensing measurement; and
parameter information that the first device is able to simultaneously perform sensing measurement.

The sensing signal transmission processing apparatus provided in this embodiment of this application can implement the processes in the method embodiment in FIG. 4. To avoid repetition, details are not described herein again.

The sensing signal transmission processing apparatus in this embodiment of this application may be an apparatus, an apparatus or electronic device with an operating system, or a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

Optionally, as shown in FIG. 8, an embodiment of this application further provides a communication device 800, including a processor 801, a memory 802, and a program or an instruction stored in the memory 802 and capable of running on the processor 801. When the program or the instruction is executed by the processor 801, the processes of the foregoing embodiments of the sensing signal transmission processing method are implemented, with the same technical effects achieved. To avoid repetition, details are not described herein again.

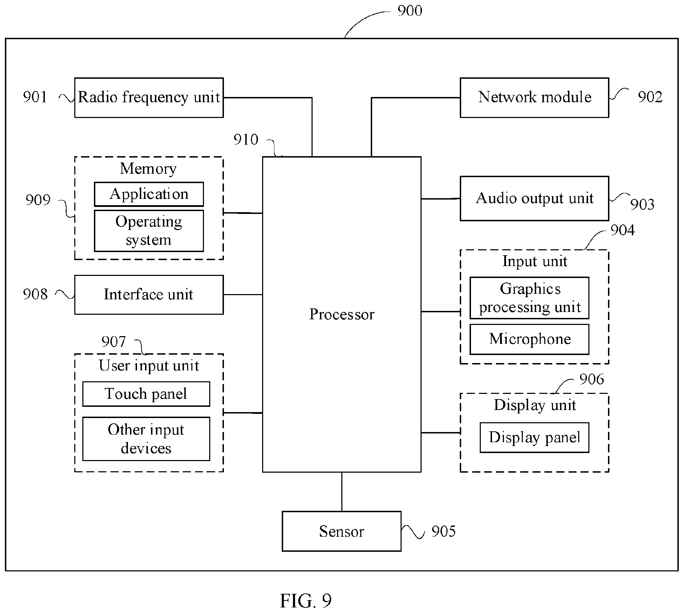

An embodiment of this application further provides a terminal, including a processor and a communication interface. The communication interface is configured to: receive first signaling from a second device, where the first signaling is used to indicate a target sensing signal; and perform sensing measurement on the target sensing signal or send the target sensing signal, where the target sensing signal includes N types of sensing signals, N is a positive integer, and in a case that N is 1, the target sensing signal includes at least two resources. Alternatively, the communication interface is configured to send first signaling to a first device, where the first signaling is used to indicate a target sensing signal on which the first device performs sensing measurement, or to indicate the first device to send the target sensing signal, where the target sensing signal includes N types of sensing signals, N is a positive integer, and in a case that N is 1, the target sensing signal includes at least two resources. The terminal embodiment corresponds to the foregoing method embodiment on the terminal side, and the implementation processes and implementations of the foregoing method embodiment are applicable to the terminal embodiment, with the same technical effects achieved. Specifically, FIG. 9 is a schematic diagram of a hardware structure of a terminal for implementing the embodiments of this application.

A terminal 900 includes but is not limited to at least a part of components such as a radio frequency unit 901, a network module 902, an audio output unit 903, an input unit 904, a sensor 905, a display unit 906, a user input unit 907, an interface unit 908, a memory 909, and a processor 910.

A person skilled in the art can understand that the terminal 900 may further include a power supply (for example, a battery) for supplying power to the components. The power supply may be logically connected to the processor 910 via a power management system. In this way, functions such as charge management, discharge management, and power consumption management are implemented via the power management system. The terminal structure shown in FIG. 9 does not constitute any limitation on the terminal. The terminal may include more or fewer components than shown in the figure, or combine some of the components, or have the components arranged differently, which are not further described herein.

It should be understood that in this embodiment of this application, the input unit 904 may include a graphics processing unit (Graphics Processing Unit, GPU) and a microphone. The graphics processing unit processes image data of a static picture or a video obtained by an image capture apparatus (for example, a camera) in a video capture mode or an image capture mode. The display unit 906 may include a display panel, and the display panel may be configured in a form of a liquid crystal display, an organic light-emitting diode, or the like. The user input unit 907 includes a touch panel and other input devices. The touch panel is also referred to as a touchscreen. The touch panel may include two parts: a touch detection apparatus and a touch controller. The other input devices may include but are not limited to a physical keyboard, a functional key (such as a volume control key or a power on/off key), a trackball, a mouse, and a joystick, which are not further described herein.

In this embodiment of this application, the radio frequency unit 901 receives downlink data from a network-side device and then sends the downlink data to the processor 910 for processing; and sends uplink data to the network-side device. Usually, the radio frequency unit 901 includes but is not limited to an antenna, at least one amplifier, a transceiver, a coupler, a low noise amplifier, a duplexer, and the like.

The memory 909 may be configured to store a software program or an instruction and various data. The memory 109 may mainly include a program or instruction storage area and a data storage area. The program or the instruction storage area may store an operating system, an application or an instruction required by at least one function (for example, a sound playback function or an image playback function), and the like. In addition, the memory 909 may include a high-speed random access memory, and may further include a non-transitory memory. The non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transitory solid-state storage device.

The processor 910 may include one or more processing units. Optionally, the processor 910 may integrate an application processor and a modem processor. The application processor mainly processes an operating system, a user interface, an application program or an instruction, and the like. The modem processor mainly processes wireless communication, for example, a baseband processor. It can be understood that the modem processor may alternatively be not integrated into the processor 910.

The radio frequency unit 901 is configured to: receive first signaling from a second device, where the first signaling is used to indicate a target sensing signal; and perform sensing measurement on the target sensing signal or send the target sensing signal, where the target sensing signal includes N types of sensing signals, N is a positive integer, and in a case that N is 1, the target sensing signal includes at least two resources.

Alternatively, the radio frequency unit 901 is configured to send first signaling to a first device, where the first signaling is used to indicate a target sensing signal on which the first device performs sensing measurement, or to indicate the first device to send the target sensing signal, where the target sensing signal includes N types of sensing signals, N is a positive integer, and in a case that N is 1, the target sensing signal includes at least two resources.

The terminal provided in this embodiment of this application is capable of implementing the processes implemented in the method embodiments in FIG. 4 and FIG. 5, with the same technical effects achieved. To avoid repetition, details are not described herein again.

An embodiment of this application further provides a network-side device, including a processor and a communication interface. The communication interface is configured to: receive first signaling from a second device, where the first signaling is used to indicate a target sensing signal; and perform sensing measurement on the target sensing signal or send the target sensing signal, where the target sensing signal includes N types of sensing signals, N is a positive integer, and in a case that N is 1, the target sensing signal includes at least two resources. Alternatively, the communication interface is configured to send first signaling to a first device, where the first signaling is used to indicate a target sensing signal on which the first device performs sensing measurement, or to indicate the first device to send the target sensing signal, where the target sensing signal includes N types of sensing signals, N is a positive integer, and in a case that N is 1, the target sensing signal includes at least two resources. The network-side device embodiment corresponds to the foregoing method embodiment of the network-side device, and the implementation processes and implementations of the foregoing method embodiment are applicable to the network-side device embodiment, with the same technical effects achieved.

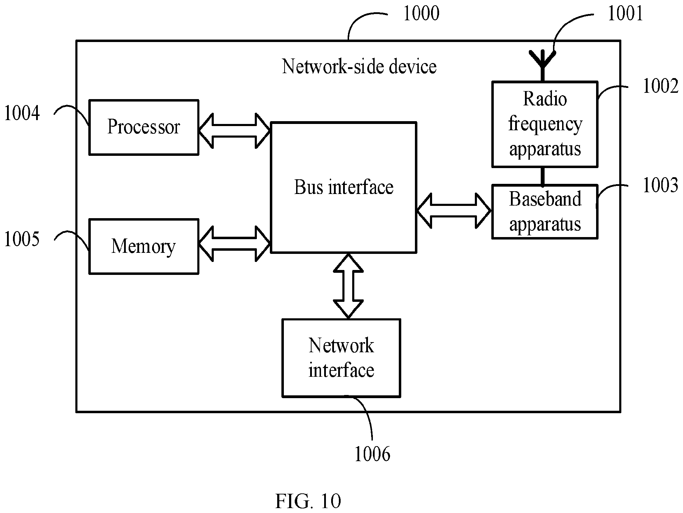

Specifically, an embodiment of this application further provides a network-side device. As shown in FIG. 10, the network-side device 1000 includes an antenna 1001, a radio frequency apparatus 1002, and a baseband apparatus 1003. The antenna 1001 is connected to the radio frequency apparatus 1002. In an uplink direction, the radio frequency apparatus 1002 receives information by using the antenna 1001, and sends the received information to the baseband apparatus 1003 for processing. In a downlink direction, the baseband apparatus 1003 processes to-be-sent information, and sends the information to the radio frequency apparatus 1002; and the radio frequency apparatus 1002 processes the received information and then sends the information by using the antenna 1001.

The radio frequency apparatus may be located in the baseband apparatus 1003. The method performed by the network-side device in the foregoing embodiments may be implemented in the baseband apparatus 1003, and the baseband apparatus 1003 includes a processor 1004 and a memory 1005.

The baseband apparatus 1003 may include, for example, at least one baseband processing unit, where a plurality of chips are disposed on the baseband processing unit. As shown in FIG. 10, one of the chips is, for example, the processor 1004, connected to the memory 1005, to invoke a program in the memory 1005 to perform the operation of the network-side device shown in the foregoing method embodiment.

The baseband apparatus 1003 may further include a network interface 1006, configured to exchange information with the radio frequency apparatus 1002, where the interface is, for example, a common public radio interface (common public radio interface, CPRI for short).

Specifically, the network-side device in this embodiment of this application further includes an instruction or a program stored in the memory 1005 and capable of running on the processor 1004. The processor 1004 invokes the instruction or program in the memory 1005 to execute the method executed by the modules shown in FIG. 6 or FIG. 7, with the same technical effects achieved. To avoid repetition, details are not described herein again.

An embodiment of this application further provides a readable storage medium, where a program or an instruction is stored in the readable storage medium. When the program or the instruction is executed by a processor, the processes of the foregoing embodiment of the sensing signal transmission processing method are implemented, with the same technical effects achieved. To avoid repetition, details are not described herein again.

The processor is a processor in the electronic device in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or an instruction to implement the processes of the foregoing embodiment of the sensing signal transmission processing method, with the same technical effects achieved. To avoid repetition, details are not repeated herein again.

It should be understood that the chip mentioned in this embodiment of this application may also be referred to as a system-level chip, a system chip, a chip system, or a system-on-chip.

In addition, an embodiment of this application provides a program product. The program product is stored in a non-transitory storage medium, and the program product is executed by at least one processor to implement the processes of the foregoing embodiment of the sensing signal transmission processing method, with the same technical effects achieved. To avoid repetition, details are not described herein again.

It should be noted that, in this specification, the terms "include", "comprise", or any of their variants are intended to cover a non-exclusive inclusion, such that a process, a method, an article, or an apparatus that includes a series of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

According to the description of the foregoing implementations, a person skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a base station, or the like) to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. As instructed by this application, a person of ordinary skill in the art may develop many other forms without departing from the principle of this application and the protection scope of the claims, and all such forms fall within the protection scope of this application.

## Claims

1. A sensing signal transmission processing method, comprising:
receiving, by a first device, first signaling from a second device, wherein the first signaling is used to indicate a target sensing signal; and
performing, by the first device, sensing measurement on the target sensing signal or sending, by the first device, the target sensing signal, wherein
the target sensing signal comprises N types of sensing signals, N is a positive integer, and in a case that N is 1, the target sensing signal comprises at least two resources.

2. The method according to claim 1, wherein before the receiving, by a first device, first signaling from a second device, the method further comprises:
receiving, by the first device, second signaling from the second device, wherein the second signaling carries configuration information of at least one type of sensing signal or configuration information of at least one resource of one type of sensing signal.

3. The method according to claim 2, wherein the target sensing signal is at least some of sensing signals associated with the second signaling.

4. The method according to claim 2, wherein the first signaling or the second signaling is further used to indicate at least one of the following:
a power difference between the sensing signals of different types;
a power difference between the sensing signals with different resources; and
a quasi-co-location QCL relationship between the sensing signals.

5. The method according to claim 1, wherein after the performing, by the first device, sensing measurement on the target sensing signal, the method further comprises:
reporting, by the first device, measurement information of a target sensing measurement quantity, wherein the target sensing measurement quantity comprises at least one of the following sensing measurement quantities: a channel matrix, channel state information, reference signal received power, a received signal strength indication, a channel power delay profile, a Doppler power spectrum, Doppler spread, a coherence bandwidth, a coherence time, power of at least one path of a multipath channel, a delay of the at least one path of the multipath channel, an angle of the at least one path of the multipath channel, a Doppler frequency shift, a quotient of frequency domain channel responses of a first antenna and a second antenna, a conjugate product of the frequency domain channel responses of the first antenna and the second antenna, an amplitude ratio between received signals of the first antenna and the second antenna, an amplitude difference between the received signals of the first antenna and the second antenna, a phase difference between the first antenna and the second antenna, and angle-related information of the first antenna and the second antenna, wherein
the first antenna and the second antenna are receive antennas of the first device.

6. The method according to claim 5, wherein the method further comprises:
receiving, by the first device, feedback configuration information corresponding to the target sensing measurement quantity from the second device, wherein
the feedback configuration information comprises at least one of the following:
a time domain resource for feeding back the target sensing measurement quantity;
a frequency domain resource for feeding back the target sensing measurement quantity; and
a granularity or a step for feeding back the target sensing measurement quantity.

7. The method according to claim 5, wherein the reporting, by the first device, measurement information of a target sensing measurement quantity comprises:
reporting, by the first device, the measurement information of the target sensing measurement quantity to a target device, wherein the target device is the second device or a third device associated with the second device.

8. The method according to claim 5, wherein the measurement information of the target sensing measurement quantity comprises at least one of the following:
first measurement information corresponding to at least one first sensing measurement quantity, wherein the first sensing measurement quantity is one of the target sensing measurement quantity, and first measurement information corresponding to each first sensing measurement quantity comprises at least one of the following: index values of M sensing signals, wherein the M sensing signals are all sensing signals corresponding to the first sensing measurement quantity, and M is an integer greater than 1; and a measurement value of the sensing signal corresponding to each index value; and
second measurement information corresponding to at least one second sensing measurement quantity, wherein the second sensing measurement quantity is one of the target sensing measurement quantity, and second measurement information corresponding to each second sensing measurement quantity is associated with all sensing signals corresponding to the second sensing measurement quantity.

9. The method according to claim 1, wherein the method further comprises:
sending, by the first device, assistance information to a target device, wherein
the target device is the second device or a third device associated with the second device, and in a case that the first device performs sensing measurement on the target sensing signal, the assistance information is used to indicate at least one of a type, a resource, and configuration information of a sensing signal that is expected to be sent by the second device; and
in a case that the first device sends the target sensing signal, the assistance information is used to indicate at least one of a type, a resource, and configuration information of a sensing signal that the first device expects to send.

10. The method according to claim 1, wherein the method further comprises:
reporting, by the first device, capability information to a target device, wherein the capability information is used to indicate at least one of the following:
a type of a sensing signal on which the first device is able to simultaneously perform sensing measurement;
a number of the sensing signal on which the first device is able to simultaneously perform sensing measurement;
a number of resources that the first device is able to simultaneously perform sensing measurement; and
parameter information that the first device is able to simultaneously perform sensing measurement; wherein
the target device is the second device or a third device associated with the second device.

11. A sensing signal transmission processing method, comprising:
sending, by a second device, first signaling to a first device, wherein the first signaling is used to indicate a target sensing signal on which the first device performs sensing measurement, or to indicate the first device to send the target sensing signal, wherein
the target sensing signal comprises N types of sensing signals, N is a positive integer, and in a case that N is 1, the target sensing signal comprises at least two resources.

12. The method according to claim 11, wherein before the sending, by a second device, first signaling to a first device, the method further comprises:
sending, by the second device, second signaling to the first device, wherein the second signaling carries configuration information of at least one type of sensing signal or configuration information of at least one resource of one type of sensing signal.

13. The method according to claim 12, wherein the target sensing signal is at least some of sensing signals associated with the second signaling.

14. The method according to claim 12, wherein the first signaling or the second signaling is further used to indicate at least one of the following:
a power difference between the sensing signals of different types;
a power difference between the sensing signals with different resources; and
a quasi-co-location QCL relationship between the sensing signals.

15. The method according to claim 11, wherein the method further comprises:
receiving, by the second device, measurement information of a target sensing measurement quantity, wherein the target sensing measurement quantity comprises at least one of the following sensing measurement quantities: a channel matrix, channel state information, reference signal received power, a received signal strength indication, a channel power delay profile, a Doppler power spectrum, Doppler spread, a coherence bandwidth, a coherence time, power of at least one path of a multipath channel, a delay of the at least one path of the multipath channel, an angle of the at least one path of the multipath channel, a Doppler frequency shift, a quotient of frequency domain channel responses of a first antenna and a second antenna, a conjugate product of the frequency domain channel responses of the first antenna and the second antenna, an amplitude ratio between received signals of the first antenna and the second antenna, an amplitude difference between the received signals of the first antenna and the second antenna, a phase difference between the first antenna and the second antenna, and angle-related information of the first antenna and the second antenna, wherein
the first antenna and the second antenna are receive antennas of a receive end of the target sensing signal.

16. The method according to claim 15, wherein the method further comprises:
sending, by the second device, feedback configuration information corresponding to the target sensing measurement quantity, wherein
the feedback configuration information comprises at least one of the following:
a time domain resource for feeding back the target sensing measurement quantity;
a frequency domain resource for feeding back the target sensing measurement quantity; and
a granularity or a step for feeding back the target sensing measurement quantity.

17. The method according to claim 15, wherein the measurement information of the target sensing measurement quantity comprises at least one of the following:
first measurement information corresponding to at least one first sensing measurement quantity, wherein the first sensing measurement quantity is one of the target sensing measurement quantity, and first measurement information corresponding to each first sensing measurement quantity comprises at least one of the following: index values of M sensing signals, wherein the M sensing signals are all sensing signals corresponding to the first sensing measurement quantity, and M is an integer greater than 1; and a measurement value of the sensing signal corresponding to each index value; and
second measurement information corresponding to at least one second sensing measurement quantity, wherein the second sensing measurement quantity is one of the target sensing measurement quantity, and second measurement information corresponding to each second sensing measurement quantity is associated with all sensing signals corresponding to the second sensing measurement quantity.

18. The method according to claim 15, wherein after the receiving, by the second device, measurement information of a target sensing measurement quantity, the method further comprises:
forwarding, by the second device, the measurement information of the target sensing measurement quantity to a third device associated with the second device.

19. The method according to claim 11, wherein the method further comprises:
receiving, by the second device, assistance information from the first device; wherein
in a case that the first signaling is used to indicate the target sensing signal on which the first device performs sensing measurement, the assistance information is used to indicate at least one of a type, a resource, and configuration information of a sensing signal that is expected to be sent by the second device; and
in a case that the first signaling is used to indicate the first device to send the target sensing signal, the assistance information is used to indicate at least one of a type, a resource, and configuration information of a sensing signal that the first device expects to send.

20. The method according to claim 11, wherein the method further comprises:
receiving, by the second device, capability information from the first device, wherein the capability information is used to indicate at least one of the following:
a type of a sensing signal on which the first device is able to simultaneously perform sensing measurement;
a number of the sensing signal on which the first device is able to simultaneously perform sensing measurement;
a number of resources that the first device is able to simultaneously perform sensing measurement; and
parameter information that the first device is able to simultaneously perform sensing measurement.

21. A sensing signal transmission processing apparatus, comprising:
a first receiving module, configured to receive first signaling from a second device, wherein the first signaling is used to indicate a target sensing signal; and
an execution module, configured to perform sensing measurement on the target sensing signal or send the target sensing signal, wherein
the target sensing signal comprises N types of sensing signals, N is a positive integer, and in a case that N is 1, the target sensing signal comprises at least two resources.

22. The apparatus according to claim 21, wherein the first receiving module is further configured to receive second signaling from the second device, wherein the second signaling carries configuration information of at least one type of sensing signal or configuration information of at least one resource of one type of sensing signal.

23. The apparatus according to claim 21, wherein the sensing signal transmission processing apparatus further comprises:
a first sending module, configured to report measurement information of a target sensing measurement quantity, wherein the target sensing measurement quantity comprises at least one of the following sensing measurement quantities: a channel matrix, channel state information, reference signal received power, a received signal strength indication, a channel power delay profile, a Doppler power spectrum, Doppler spread, a coherence bandwidth, a coherence time, power of at least one path of a multipath channel, a delay of the at least one path of the multipath channel, an angle of the at least one path of the multipath channel, a Doppler frequency shift, a quotient of frequency domain channel responses of a first antenna and a second antenna, a conjugate product of the frequency domain channel responses of the first antenna and the second antenna, an amplitude ratio between received signals of the first antenna and the second antenna, an amplitude difference between the received signals of the first antenna and the second antenna, a phase difference between the first antenna and the second antenna, and angle-related information of the first antenna and the second antenna, wherein
the first antenna and the second antenna are receive antennas of a receive end of the target sensing signal.

24. A sensing signal transmission processing apparatus, comprising:
a second sending module, configured to send first signaling to a first device, wherein the first signaling is used to indicate a target sensing signal on which the first device performs sensing measurement, or to indicate the first device to send the target sensing signal, wherein
the target sensing signal comprises N types of sensing signals, N is a positive integer, and in a case that N is 1, the target sensing signal comprises at least two resources.

25. The apparatus according to claim 24, wherein the second sending module is further configured to send second signaling, wherein the second signaling carries configuration information of at least one type of sensing signal or configuration information of at least one resource of one type of sensing signal.

26. The apparatus according to claim 24, wherein the sensing signal transmission processing apparatus further comprises:
a second receiving module, configured to receive measurement information of a target sensing measurement quantity, wherein the target sensing measurement quantity comprises at least one of the following sensing measurement quantities: a channel matrix, channel state information, reference signal received power, a received signal strength indication, a channel power delay profile, a Doppler power spectrum, Doppler spread, a coherence bandwidth, a coherence time, power of at least one path of a multipath channel, a delay of the at least one path of the multipath channel, an angle of the at least one path of the multipath channel, a Doppler frequency shift, a quotient of frequency domain channel responses of a first antenna and a second antenna, a conjugate product of the frequency domain channel responses of the first antenna and the second antenna, an amplitude ratio between received signals of the first antenna and the second antenna, an amplitude difference between the received signals of the first antenna and the second antenna, a phase difference between the first antenna and the second antenna, and angle-related information of the first antenna and the second antenna, wherein
the first antenna and the second antenna are receive antennas of a receive end of the target sensing signal.

27. A terminal, comprising a memory, a processor, and a program or an instruction stored in the memory and capable of running on the processor, wherein when the program or the instruction is executed by the processor, the steps of the sensing signal transmission processing method according to any one of claims 1 to 20 are implemented.

28. A network-side device, comprising a memory, a processor, and a program or an instruction stored in the memory and capable of running on the processor, wherein when the program or the instruction is executed by the processor, the steps of the sensing signal transmission processing method according to any one of claims 1 to 20 are implemented.

29. A readable storage medium, wherein a program or an instruction is stored in the readable storage medium, and when the program or the instruction is executed by a processor, the steps of the sensing signal transmission processing method according to any one of claims 1 to 20 are implemented.
